**Europäisches Patentamt**

**European Patent Office**

**Office européen des brevets**

(19)

(11) Veröffentlichungsnummer: **0 300 280 B1**

(12) # EUROPÄISCHE PATENTSCHRIFT

(45) Veröffentlichungstag der Patentschrift:
14.11.90

(21) Anmeldenummer: 88110856.7

(22) Anmeldetag: 07.07.88

(51) Int. Cl.⁵: **F16K 21/00,** F16K 31/06,
A47J 31/46

(54) Elektromagnetventil, insbesondere Auslaufventil für Brühwasser.

(30) Priorität: 21.07.87 DE 8709978 U

(43) Veröffentlichungstag der Anmeldung:
25.01.89 Patentblatt 89/4

(45) Bekanntmachung des Hinweises auf die Patenterteilung:
14.11.90 Patentblatt 90/46

(84) Benannte Vertragsstaaten:
AT BE CH DE ES FR GB GR IT LI NL SE

(56) Entgegenhaltungen:
CH-A- 381 489
DD-A- 128 496
DE-A- 3 613 481
FR-A- 2 323 084
US-A- 3 162 340
US-A- 3 523 676
US-A- 4 251 052

(73) Patentinhaber: A. und K. Müller GmbH & Co. KG,
Bücherstrasse 31-37, D-4000 Düsseldorf 13(DE)

(72) Erfinder: Moldenhauer, Hermann, Lüdenscheider
Strasse 2, D-4000 Düsseldorf 12(DE)

(74) Vertreter: Feder, Wolf-Dietrich et al, Dr. Wolf-D. Feder,
Dr. Heinz Feder Dipl.-Ing. P.-C. Sroka
Dominikanerstrasse 37, D-4000 Düsseldorf 11(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Elektromagnetventil, insbesondere ein Auslaufventil für Brühwasser, mit einem Ventilgehäuse, in dem eine Ventilkammer angeordnet ist, die mit einem Zuflußkanal direkt und mit einem Abflußkanal über einen Ventilsitz verbinden ist und mit einem am Ventilgehäuse angeordneten Magnetsystem mit einer Magnetspule, in welcher ein in einem Führungsrohr geführter Magnetanker angeordnet ist, der einem im Oberteil der Magnetspule angeordneten, mit einem Magnetjoch verbundenen Kopfstück gegenüberliegt, und der an seinem dem Ventilsitz zugekehrten Ende über einen Ventilschaft mit einem Ventilteller verbunden ist, wobei die Ventilkammer gegen den Innenraum des Führungsrohres durch eine Trennmembran abgeschlossen ist, deren Außenrand dichtend am Ventilgehäuse und deren Innenrand dichtend mit dem Ventilteller verbunden ist.

Derartige sogenannte mediengetrennte Elektromagnetventile, die vor allem an Heißgetränkeautomaten verwendet werden, sind an sich bekannt. Ein Ventil der oben angegebenen Bauart ist beispielsweise in der älteren EP-A 243 677, veröffentlicht am 4. November 1987, beschrieben.

Auch der CH-A 381 489 sind diese Merkmale entnehmbar. Dort ist die Trennmemoran ebenfalls einstückig mit dem Ventilteller verbunden.

Werden die Ventile als Auslaufventile für Brühwasser verwendet, so sind sie einer sehr hohen Beanspruchung ausgesetzt und müssen regelmäßig überholt und nach relativ kurzer Einsatzzeit auch ausgewechselt werden. Es hat sich herausgestellt, daß eine Reihe von Ursachen für diese hohe Beanspruchung verantwortlich sind.

Bei stark kalkhaltigem Wasser bilden sich beispielsweise verhältnismäßig schnell Kalkablagerungen im Ventilgehäuse und insbesondere auf dem Ventilsitz und am Ventilteller. Dies führt im Anfangsstadium nur zu gewissen Leckagen doch noch nicht zum völligen Versagen des Ventils. Da aber das infolge der Leckage auftretende Tropfwasser an der Schnittstelle zwischen dem wasserführenden Teil des Ventils und der freien Atmosphäre verdunstet, lagern sich dort die im Wasser befindlichen Härtebildner ab, so daß es schließlich zum völligen Versagen des Ventils kommt. Der Vorgang wird durch die hohe Temperatur des Mediums beschleunigt.

Im Weichwasserbereich ist die Verkalkung als Ausfallursache von geringerer Bedeutung, dafür bilden sich durch mechanischen Abrieb des Magnetankers im Führungsrohr ferritische Bestandteile, die sich in dem geschlossenen Ankerraum ablagern. Es entsteht ein korrosionsanfälliges Pulver, welches sich im Magnetsystem des Ventils festsetzt und dort korrodiert. Dieser Vorgang wird noch dadurch beschleunigt, daß trotz der Trennmembran zwischen der Ventilkammer und dem Innenraum des Führungsrohres mit der Zeit Feuchtigkeit in diesen Innenraum gelangen kann. Dies ist darauf zurückzuführen, daß als Trennmembranen dünnwandige Membranen aus Silikonmaterial eingesetzt werden. Durch dieses Material kann Wasserdampf, besonders in der Nähe des Siedepunktes, in geringem Maße hindurchdiffundieren. An der dem Innenraum des Führungsrohres zugewandten Seite der Membrane sammelt sich ein Kondensat an, welches kalkfrei ist, jedoch bewirkt, daß sich der ferritische Abrieb des Magnet ankers in Ferroxid umwandelt. Aufgrund dieses Korrosionsabriebes kommt es in Abhängigkeit von der Schalthäufigkeit schließlich zum Blockieren des Magnetankers. Weiterhin kann es durch die Ansammlung von Kondensatwasser an der Befestigungsstelle zwischen dem Ventilschaft und dem im allgemeinen mit der Trennmembran einstückig verbundenen Ventilteller zu Hubänderungen kommen, die zu Dosierungsungenauigkeiten führen.

In besonders ungünstigen Fällen kann die Diffusion des Wassers durch die Trennmembran sogar zum Ausfall des elektrischen Steuersystems führen.

Schließlich hat sich noch herausgestellt, daß trotz hoher Fertigungspräzision der Magnetanker versucht im Führungsrohr eine Vorzugsstellung einzunehmen. Das hat zur Folge, daß der Ventilteller im Dichtungsbereich einem asymmetrischen Auflagedruck ausgesetzt ist. An der Stelle des geringsten Auflagedruckes sind die Kalkablagerungen am stärksten.

Die der Erfindung zugrunde liegende Aufgabe bestand darin, ein Magnetventil der eingangs erwähnten Bauart so auszugestalten, daß die oben erwähnten Nachteile nicht auftreten und insbesondere eine Kalkablagerung im Bereich zwischen Ventilteller und Ventilsitz verhindert wird. Weiterhin sollte es bei dem neuen Elektromagnetventil möglich sein, die Bildung von Kondensatwasser im Innenraum des Führungsrohres zu verhindern. Damit sollte die Lebensdauer eines derartigen Ventils beträchtlich gesteigert werden.

Die Lösung der oben angegebenen Aufgabe geschieht erfindungsgemäß dadurch, daß der Ventilsitz eine längs seines inneren Umfanges koaxial zur Achse des Ventilschaftes angeordnete Folie aus Polytetrafluoräthylen enthält, die an der dem Ventilteller zugewandten Seite die Oberfläche des Ventilsitzes um einen vorgegebenen Längenbetrag überragt, wobei die Oberfläche der dem Ventilteller zugewandten Kante der Folie in einer Schließebene liegt, die senkrecht zur Achse des Ventilschaftes angeordnet ist und der Ventilteller aus einem gummielastischen Material besteht, das eine geringere Härte aufweist als die Folie und seine dem Ventilsitz zugekehrte Oberfläche mindestens an den Auflagebereichen in radialer Richtung mit der Schließebene spitze Winkel einschließt.

Es hat sich als besonders vorteilhaft erwiesen, wenn die die Oberfläche des Ventilsitzes überragende Folie als geschlossenes Rohrstück ausgebildet ist, wobei der Längenbetrag, um den die Folie die Oberfläche des Ventilsitzes überragt, im wesentlichen gleich der Foliendicke sein kann.

Weiterhin hat es sich als vorteilhaft erwiesen, wenn zur Unterdrückung der Kondensatwasserbildung innerhalb der Trennmembran der Innenraum des Führungsrohres im Bereich unmittelbar oberhalb der Trennmembran über mindestens eine Belüftungsöffnung mit dem Außenraum außerhalb des Ventils verbunden ist. Dabei können am Umfang des Ventilgehäuses verteilt in einer Ebene senkrecht zur Achse des Ventilschaftes mehrere Belüftungsöffnungen angeordnet sein.

Der im wesentlichen als kegelstumpfförmiger Körper ausgebildete Ventilteller kann am Ventilschaft über eine Schraubverbindung befestigt sein dergestalt, daß am Ende des Ventilschaftes ein Gewindezapfen angeordnet ist, der ein nichtschneidendes Gewinde aufweist, das in eine Bohrung im Ventilteller eingeschraubt ist. Weiterhin kann in dem im wesentlichen als kegelstumpfförmiger Körper ausgebildeten Ventilteller koaxial zur Achse des Ventilschaftes ein rohrförmiges Stützteil angeordnet sein, das in Richtung zum Magnetanker aus dem Ventilteller heraus und bis in den Innenraum des Führungsrohres hineingeführt ist und mindestens an seiner äußeren Mantelfläche in Längsrichtung über seine ganze Länge verlaufende Dränagerinnen aufweist.

Eine besonders langlebige Ausführungsform des erfindungsgemäßen Ventils erhält man wegen des hier auftretenden, äußerst geringen Abriebs bei der Bewegung des Magnetankers im Führungsrohr, wenn eine Folie aus einem Graphit oder Kohlenstoff als Füllstoff enthaltenden fluorhaltigen Polymer in den an das Kopfstück angrenzenden Abschnitt des Führungsrohres auf einer vorgegebenen Länge den Magnetanker an seiner Mantelfläche umfassend eingelegt und mindestens an dem dem Kopfstück zugewandten Ende axial und radial fixiert ist.

Wie weiter unten anhand eines Ausführungsbeispiels näher erläutert wird, hat sich herausgestellt, daß bei dem erfindungsgemäßen Elektromagnetventil keine Kalkablagerungen auftreten und daß insbesondere bei den bevorzugten Ausführungsformen die Kondensatwasserbildung innerhalb der Trennmembran unterdrückt werden kann und eine große Langlebigkeit des Ventils erzielt werden kann.

Im folgenden wird anhand der beigefügten Zeichnungen ein Ausführungsbeispiel für ein Elektromagnetventil gemäß der Erfindung näher erläutert.

In den Zeichnungen zeigen:

Fig. 1 Ein Elektromagnetventil im Längsschnitt;
Fig. 2 in gegenüber Fig. 1 vergrößerter Darstellung einen Ausschnitt aus dem Ventil nach Fig. 1 im Bereich des Ventilsitzes;
Fig. 3 und 4 jeweils in perspektivischer Darstellung Einzelteile des Ventils nach Fig. 1 und 2.

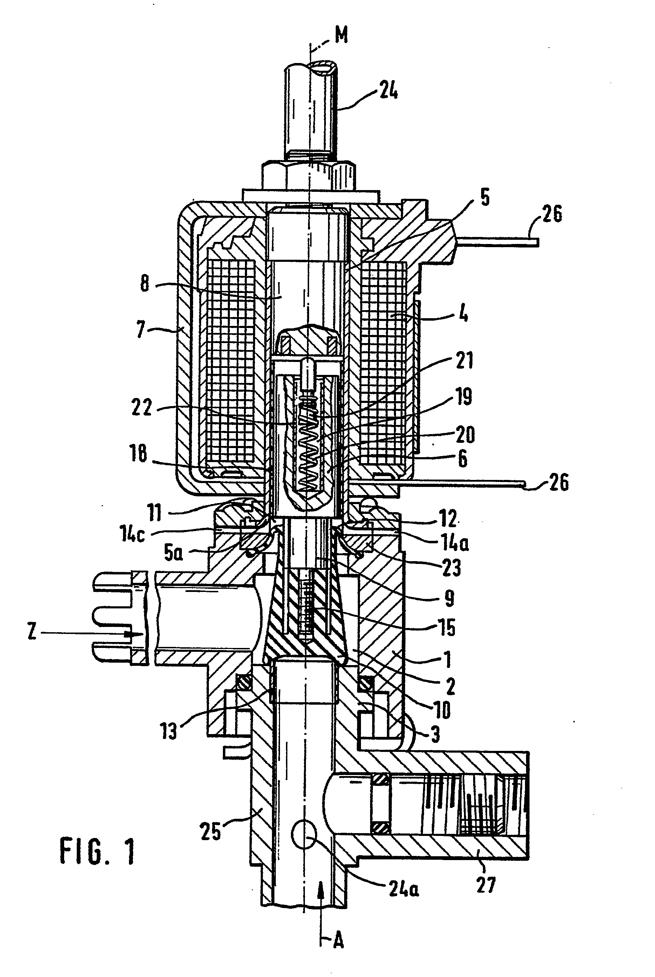

Das in den Figuren 1 bis 3 dargestellte Elektromagnetventil, das zur Anwendung als Auslaufventil an Heißgetränkeautomaten gedacht ist, besitzt ein Ventilgehäuse 1, in dem eine Ventilkammer 2 angeordnet ist. In die Ventilkammer mündet ein Zufluß Z. An der Unterseite des Gehäuses 1 ist ein Unterteil 25 angeordnet, das den nach unten herausgeführten Abfluß A aufweist, und an dessen die Ventilkammer 2 begrenzendem Oberteil ein Ventilsitz 3 angeordnet ist, dem der in der Ventilkammer 2 angeordnete Ventilteller 10 gegenüberliegt.

Der Ventilteller 10 ist als im wesentlichen kegelstumpfförmiger Körper ausgebildet und besteht zweckmäßigerweise aus einem Silikonmaterial. An seinem oberen Rand geht er einstückig über in eine Trennmembran 12, die an ihrem äußeren Rand 12a dichtend mit dem Ventilgehäuse 1 verbunden ist. Der oberhalb der Trennmembran 12 gelegene Raum ist auf diese Weise flüssigkeitsdicht von der Ventilkammer 2 abgetrennt. Der Ventilkegel 10 ist in weiter unten näher erläuterter Weise an einem Ventilschaft 9 befestigt, der als Ansatz eines Magnetankers 6 ausgebildet ist. Der zum Magnetsystem des Elektromagnetventils gehörende Magnetanker 6 ist in einem Führungsrohr 5 geführt, das innerhalb einer Magnetspule 4 angeordnet ist. Im Oberteil der Magnetspule 4 befindet sich ein Kopfstück 8, das mit einem die Magnetspule 4 umfassenden Magnetjoch 7 verbunden ist. An der Seite des Magnetsystems ist ein elektrischer Anschluß 26 angeordnet.

Die als Rollmembran ausgebildete Trennmembran 12 und der in sie integrierte Ventilteller 10 sind so ausgestaltet, daß die in Öffnungsrichtung nach oben wirksame Wirkungsfläche der Rollmembran 12 kleiner ist als die in Schließrichtung wirksame Wirkungsfläche des Ventiltellers 10. Hiermit wird erreicht, daß einerseits das Schließen des Ventils durch den Mediumsdruck unterstützt wird, andererseits aber vom Magnetsystem nur die Öffnungskraft aufgebracht werden muß, die durch die Differenz der auf die beiden Wirkungsflächen wirkenden Drucke gegeben ist.

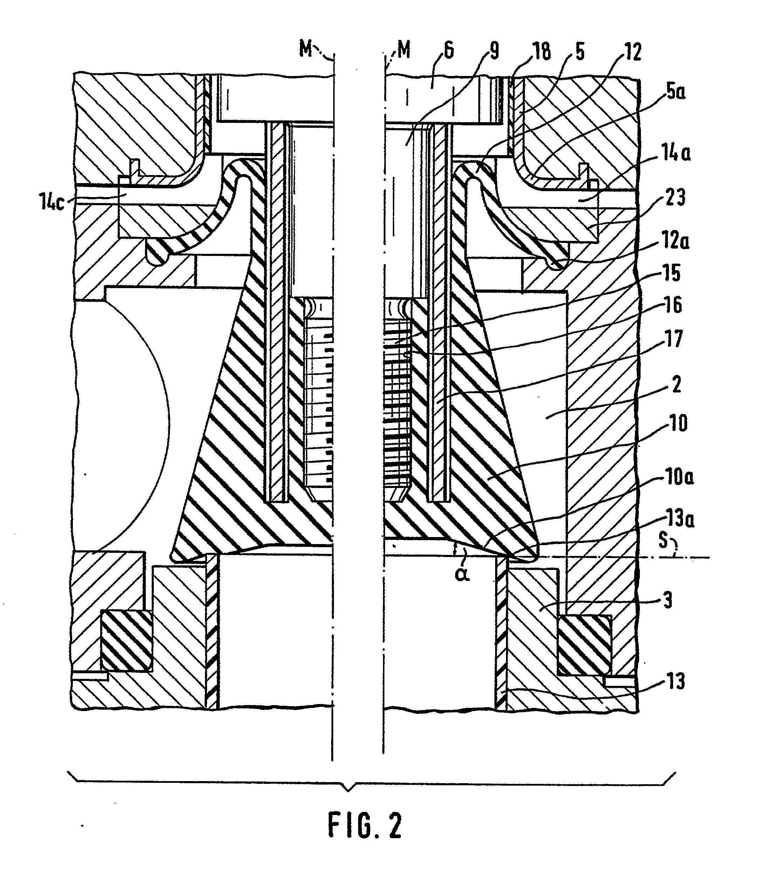

Wie insbesondere Fig. 2 zu entnehmen, ist in den Ventilsitz 3 eine als Rohrstück ausgebildete Folie 13 aus Polytetrafluoräthylen so eingesetzt, daß sie den Ventilsitz 3 an der dem Ventilteller 10 zugekehrten Seite um einen Längenbetrag überragt, der in etwa der Dicke der Folie entspricht. Diese Dicke kann beispielsweise 0,5 mm betragen.

Selbstverständlich kann anstelle eines Rohrstückes auch ein Folienabschnitt längs des Umfanges des Ventilsitzes 3 eingelegt werden.

Die Anordnung ist so, daß die Oberkante 13a der Folie 13 in einer Ebene S liegt, die senkrecht zur Mittelachse M steht und als "Schließebene" bezeichnet werden kann. Der Ventilteller 10 ist aus einem Material, dessen Härte geringer ist als die Härte der Folie 13. Die dem Ventilsitz 3 zugewandte Oberfläche des Ventiltellers 10 ist leicht konkav ausgebildet, und die beim Schließen des Ventils auf dem Ventilsitz aufsitzenden Auflagebereiche 10a bilden in radialer Richtung mit der Schließebene S spitze Winkel $\alpha$.

In Fig. 2 ist ein Ventilteller 10 während des Schließvorganges dargestellt. Dabei zeigt die rechte Hälfte von Fig. 2 die Stellung des Ventiltellers 10 kurz vor dem Erreichen der endgültigen Schließstellung im Augenblick des Aufsetzens der Auflagebereiche 10a auf die Oberkante 13a der Folie 13.

Die linke Hälfte von Fig. 2 zeigt die endgültige Schließstellung, in der infolge des weicheren Materials an der Unterseite des Ventiltellers 10 eine leichte Verformung der Auflagebereiche 10a vorhanden ist.

Die oben beschriebene Ausbildung der Sitzpartie des Ventiltellers 10 auf dem oberen Rand der Folie 13 des Ventilsitzes 3 hat zur Folge, daß der Ventilteller mit einer spezifisch hohen Flächenpressung auf dem Ventilsitz aufliegt, ohne daß die Oberfläche des Ventiltellers zerstört wird. Vielmehr wird durch das elastische Verhalten des Materials des Ventiltellers 10 eine Relativbewegung ausgeführt, durch die eventuell haftende Kalkpartikel, die sich an der Innenseite des Ventilsitzes ansetzen wollen, selbsttätig ablösen. Das Material der Folie 13 ist infolge seiner Oberflächenbeschaffenheit kalkabweisend, so daß ein Verkalken in diesem wichtigen Funktionsbereich nahezu ausgeschlossen ist. Es hat sich gezeigt, daß der durch die Oberkante der Folie 13 gebildete Ventilsitz sich der Kontur des Ventiltellers 10 angleicht, jedoch die scharfe Kante des Ventilsitzes erhalten bleibt und ihre Wirkung nicht verliert. Im Medium mitgeführte Kalkpartikel lagern sich nicht auf dem Ventilsitz ab, sondern sie werden entweder vorher abgelagert oder mit dem Mediumstrom durch das Ventil abgeführt.

Wegen der hohen spezifischen Flächenpressung zwischen Ventilteller und Ventilsitz ist es nicht mehr erforderlich, die Dichtigkeit des Ventils durch eine starke Rückstellfeder zu erzwingen. Dies entlastet die elektrische Ausrüstung des Ventils.

Der Ventilteller 10 ist, wie insbesondere Fig. 2 zu entnehmen, am Ventilschaft 9 über eine Schraubverbindung befestigt. Hierzu weist der Ventilschaft 9 einen ihn verlängernden Gewindezapfen 15 auf, der ein nichtschneidendes Gewinde besitzt, das in eine Bohrung 16 des Ventiltellers 10 eingeschraubt ist. Das Gewinde soll dabei so ausgestaltet sein, daß in Abhängigkeit von der Shore-Härte des Silikonmaterials ein möglichst großer Anteil der Gewindegänge vom Material ausgefüllt ist. Dies bedeutet, daß bei einem härteren Material ein feineres Gewinde und bei einem weicheren Material ein gröberes Gewinde gewählt wird. Diese Befestigungsart hat einerseits den Vorteil, daß der Ventilteller gut geführt ist und eine seitliche Auslenkung vermieden wird und andererseits bei einer eventuellen Ansammlung von Flüssigkeit hinter der Trennmembran 12 eine Hubveränderung des Ventils vermieden wird.

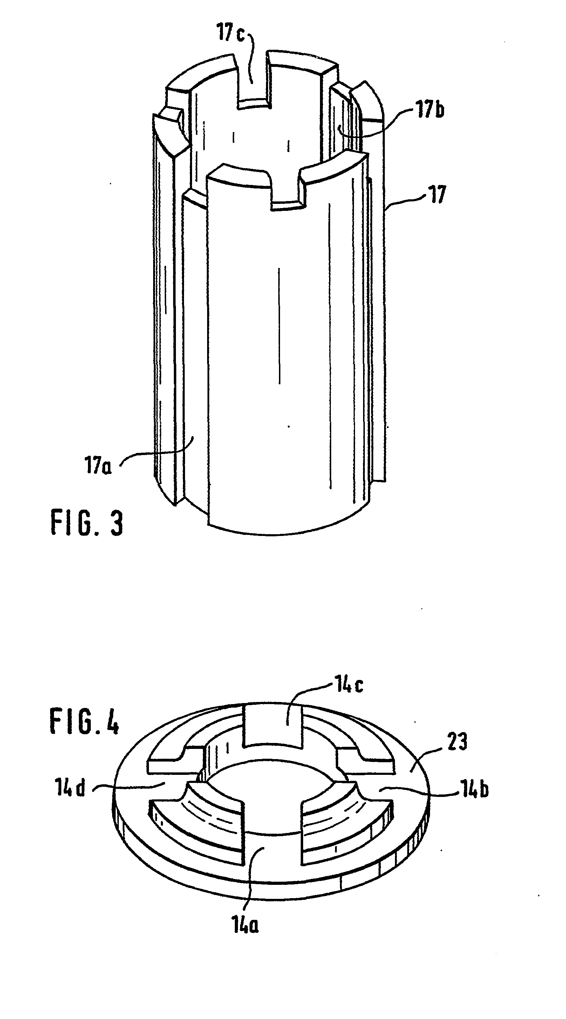

Die Ansammlung von durch die Trennmembran 12 hindurchdiffundierendem Wasser wird aber duch eine Reihe anderer Maßnahmen verhindert. In erster Linie geschieht das dadurch, daß der Innenraum 11 des Führungsrohres 5 im Bereich unmittelbar oberhalb der Trennmembran 12 so ausreichend belüftet wird, daß aus der Trennmembran 12 austretendes Wasser gar nicht tiefer in den Innenraum eindringen kann, sondern vorher rückstandslos verdunstet. Hierzu dienen Belüftungsöffnungen 14a-14d, die am Umfang des Ventilgehäuses verteilt in einer Ebene senkrecht zur Achse des Ventilschaftes 9 angeordnet sind. Wie Fig. 4 in Verbindung mit Fig. 2 zu entnehmen, sind die Belüftungsöffnungen 14a-14d in einer in das Gehäuse einlegbaren Platte 23 angeordnet, auf der der untere sich flanschartig nach außen erweiternde Teil 5a des Führungsrohres 5 aufsitzt.

Zur weiteren Unterstützung der Belüftung auch des Innenraumes des Ventiltellers 10 ist bei dem dargestellten Ausführungsbeispiel im Ventilteller 10 koaxial zur Achse M des Ventilschaftes 9 ein rohrförmiges Stützteil 17 angeordnet, das in Fig. 3 näher dargestellt ist. Das Stützteil 17 weist an seiner Außenseite Dränagerinnen 17a und an seiner Innenseite Dränagerinnen 17b auf. Es ist so innerhalb des Ventiltellers 10 angeordnet, daß sein Oberteil in den Innenraum 11 des Führungsrohres 5 hineingeführt ist und sich an der Unterfläche des Magnetankers 6 abstützt. Die Dränagerinnen 17a und 17b sind damit direkt in den Innenraum 11 hineingeführt, wobei die inneren Dränagerinnen 17b mit diesem Innenraum 11 über Öffnungen 17c verbunden sind, die am oberen Ende des Stützteiles 17 den Innenraum des Stützteiles mit dem Innenraum 11 des Führungsrohres verbinden. Diese Anordnung bewirkt, daß sich die Belüftung des Ventilinnenraumes auch auf den Innenraum des Ventiltellers 10 und die Befestigungsart erstreckt. Die Anordnung eines derartigen Stützteils ist vor allem bei größeren Ventilen vorteilhaft.

Um einer Abriebkorrosion des Magnetankers 6 entgegenzuwirken, ist in den an das Kopfstück 8 angrenzenden Abschnitt des Führungsrohrs 5 auf einer vorgegebenen Länge eine den Magnetanker 6 an seiner Mantelfläche umfassende Folie 18 eingelegt. Die Folie 18 besteht aus einem Graphit oder Kohlenstoff als Füllstoff enthaltenden fluorhaltigen Polymer und ist im Führungsrohr 5 in radialer und axialer Richtung fixiert. Diese Ausbildung hat den Vorteil, daß kein ferritischer Abrieb an der Oberfläche des Magnetankers 6 entsteht und das Zeitstandsverhalten des Ventil erheblich erhöht wird. Durch entsprechend genau abgestimmte Toleranzen des Magnetankers 6 und der Folie 18 ist es möglich, die seitliche Auslenkung des Magnetankers auf ein Minimum zu begrenzen. Dies hat wiederum zur Folge, daß der Ventilteller 10 immer die gleiche Position auf dem oberen Rand der Folie 13 im Ventilsitz 3 einnimmt.

In einer Längsbohrung 19 des Magnetankers 6 ist als Rückholfeder eine Schraubendruckfeder 20 angeordnet, die am Kopfstück 8 über einen in die Bohrung 19 eingreifenden Ansatz 21 befestigt ist. Um einen metallischen Abrieb der Schraubendruckfeder 20 zu vermeiden, ist in die Längsbohrung 19 ebenfalls eine Folie 22 aus einem Graphit oder Kohlenstoff als Füllstoff enthaltenden fluorhaltigen Polymer die Schraubendruckfeder 20 umfassend eingelegt.

Über die elektrischen Anschlüsse 26 wird der Magnetspule 4 die notwendige elektrische Energie zugeführt.

Damit nach dem Schließen des Ventils im Auslauf A kein Wasser zurückbleibt, das bis zur nächsten Zapfung erkalten und damit die Abgabetemperatur des Wassers herabsetzen würde, ist eine Belüftungsvorrichtung vorgesehen mit einer Belüftungsöffnung 24a innerhalb des Auslaufes A, an die sich ein Belüftungsrohr 24 anschließt, das bis in eine vorgegebene Höhe geführt ist, die in nichtdargestellter Weise oberhalb des Wasserspiegels eines mit dem Ventil verbundenen Behälters liegt.

Das Öffnen des Ventils geschieht duch Erregung der Magnetspule 4 und Anziehen des Magnetankers 6 gegen die Wirkung der Rückholfeder 20. Beim Entregen der Magnetspule 4 schließt das Ventil unter der Wirkung der Feder 20, wobei aufgrund der Ausbildung der der Ventilkammer 2 zugeordneten Seite des Ventiltellers 10 im Verhältnis zur Wirkungsfläche der Membran 12 eine Unterstützung der Schließkraft durch den Mediumsdruck auftritt.

Am Unterteil 25 ist zusätzlich eine Drosselvorrichtung 27 angeordnet.

## Patentansprüche

1. Elektromagnetventil, insbesondere Auslaufventil für Brühwasser, mit einem Ventilgehäuse, in dem eine Ventilkammer angeordnet ist, die mit einem Zuflußkanal direkt und mit einem Abflußkanal über einen Ventilsitz verbunden ist und mit einem am Ventilgehäuse angeordneten Magnetsystem mit einer Magnetspule, in welcher ein in einem Führungsrohr geführter Magnetanker angeordnet ist, der einem im Oberteil der Magnetspule angeordneten, mit einem Magnetjoch verbundenen Kopfstück gegenüberliegt, und der an seinem dem Ventilsitz zugekehrten Ende über einen Ventilschaft mit einem Ventilteller verbunden ist, wobei die Ventilkammer gegen den Innenraum des Führungsrohres durch eine Trennmembran abgeschlossen ist, deren Außenrand dichtend am Ventilgehäuse und deren Innenrand dichtend mit dem Ventilteller verbunden ist, dadurch gekennzeichnet, daß der Ventilsitz (3) eine längs seines inneren Umfanges koaxial zur Achse (M) des Ventilschaftes angeordnete Folie (13) aus Polytetrafluoräthylen enthält, die an der dem Ventilteller (10) zugewandten Seite die Oberfläche des Ventilsitzes (3) um einen vorgegebenen Längenbetrag überragt, wobei die Oberfläche der dem Ventilteller zugewandten Kante (13a) der Folie (13) in einer Schließebene (S) liegt, die senkrecht zur Achse (M) des Ventilschaftes angeordnet ist, und der Ventilteller (10) aus einem gummielastischen Material besteht, das eine geringere Härte aufweist als die Folie (13) und seine dem Ventilsitz (3) zugekehrte Oberfläche mindestens an den Auflagebereichen (10a) in radialer Richtung mit der Schließebene (S) spitze Winkel ($\alpha$) einschließt.

2. Elektromagnetventil nach Anspruch 1, dadurch gekennzeichnet, daß die Trennmembran (12) einstückig mit dem Ventilteller (10) verbunden ist.

3. Elektromagnetventil nach Anspruch 2, dadurch gekennzeichnet, daß Trennmembran (12) und Ventilteller (10) aus einem Silikonmaterial bestehen.

4. Elektromagnetventil nach einem der Ansprüche 1 bis 3, dadurch gekennzeichnet, daß die Folie (13) als geschlossenes Rohrstück ausgebildet ist.

5. Elektromagnetventil nach einem der Ansprüche 1 bis 4, dadurch gekennzeichnet, daß der Längenbetrag, um den die Folie (13) die Oberfläche des Ventilsitzes (3) überragt, im wesentlichen gleich der Foliendicke ist.

6. Elektromagnetventil nach einem der Ansprüche 1 bis 5, dadurch gekennzeichnet, daß der Innenraum (11) des Führungsrohres (5) im Bereich unmittelbar oberhalb der Trennmembran (12) über mindestens eine Belüftungsöffnung (14a - 14d) mit dem Außenraum außerhalb des Ventils verbunden ist.

7. Elektromagnetventil nach Anspruch 6, dadurch gekennzeichnet, daß am Umfang des Ventilgehäuses (1) verteilt in einer Ebene senkrecht zur Achse (M) des Ventilschaftes mehrere Belüftungsöffnungen (14a-14d) angeordnet sind.

8. Elektromagnetventil nach einem der Ansprüche 1 bis 7, dadurch gekennzeichnet, daß der im wesentlichen als kegelstumpfförmiger Körper ausgebildete Ventilteller (10) am Ventilschaft (9) über eine Schraubverbindung befestigt ist dergestalt, daß am Ende des Ventilschaftes (9) ein Gewindezapfen (15) angeordnet ist, der ein nichtschneidendes Gewinde aufweist, das in eine Bohrung (16) im Ventilteller (10) eingeschraubt ist.

9. Elektromagnetventil nach einem der Ansprüche 1 bis 8, dadurch gekennzeichnet, daß in dem im wesentlichen als kegelstumpfförmiger Körper ausgebildeten Ventilteller (10) koaxial zur Achse (M) des Ventilschaftes ein rohrförmiges Stützteil (17) angeordnet ist, das in Richtung zum Magnetanker (6) aus dem Ventilteller (10) heraus- und bis in den Innenraum (11) des Führungsrohres (5) hineingeführt ist und mindestens an seiner äußeren Mantelfläche in Längsrichtung über seine ganze Länge verlaufende Dränagerinnen (17a, 17b) aufweist.

10. Elektromagnetventil nach Anspruch 9, dadurch gekennzeichnet, daß das Stützteil (17) den Ventilschaft (9) umfaßt und sich am Magnetanker (6) abstützt, wobei mindestens im Bereich der Dränagerinnen (17a, 17b) in dem am Magnetanker anliegenden Ende des Stützteils (17) den Innenraum des Stützteils mit dem Innenraum des Führungsrohres verbindende Öffnungen (17c) vorgesehen sind.

11. Elektromagnetventil nach einem der Ansprüche 1 bis 10, dadurch gekennzeichnet, daß eine Folie (18) aus einem Graphit oder Kohlenstoff als Füllstoff enthaltenden fluorhaltigen Polymer in den an das Kopfstück (8) angrenzenden Abschnitt des Führungsrohres (5) auf einer vorgegebenen Länge den Magnetanker (6) an seiner Mantelfläche umfassend eingelegt und mindestens an dem dem Kopfstück (8) zugewandten Ende axial und radial fixiert ist.

12. Elektromagnetventil nach Anspruch 11, dadurch gekennzeichnet, daß der Magnetanker (6) an der dem Kopfstück (8) zugewandten Seite eine Längsbohrung (19) vorgegebener Tiefe aufweist, in der eine Schraubenfeder (20) angeordnet ist, und das Kopfstück (8) einen in diese Längsbohrung (19) eingreifenden Ansatz (21) besitzt, an dem ein Ende der Schraubenfeder (20) befestigt ist, und in die Längsbohrung (19) eine Folie (22) aus einem Graphit oder Kohlenstoff als Füllstoff enthaltenden, fluorhaltigen Polymer die Schraubenfeder (20) umfassend eingelegt ist.

## Claims

1. Electromagnetic valve, in particular a discharge valve for hot drinks water, comprising a valve housing, in which there is arranged a valve chamber that is connected directly to an inlet duct and via a valve seat to an outlet duct, and comprising a magnet system that is arranged on the valve housing and has a magnet coil in which there is arranged a magnet armature, which is guided in a guide tube, is located opposite a head piece arranged in the upper part of the magnet coil and connected to a magnet yoke, and is connected at its end facing the valve seat to a valve disc via a valve stem, the valve chamber being shut off from the interior of the guide tube by a separating diaphragm whose outer edge is connected sealingly on the valve housing and whose inner edge is connected sealingly to the valve disc, characterized in that the valve seat (3) contains a film (13) of polytetrafluoroethylene, arranged along its inner circumference coaxially with the axis (M) of the valve stem, which overlaps the surface of the valve seat (3) on the side facing the valve disc (10) by a predetermined length, the surface of the edge (13a) of the film (13) facing the valve disc lying in a plane of closure (S) that is arranged perpendicular to the axis (M) of the valve stem, and in that the valve disc (10) consists of an elastomeric material that has a lower hardness than the film (13) and whose surface facing the valve seat (3) encloses acute angles ($\alpha$) in the radial direction with the plane of closure (S), at least at the supporting areas (10a).

2. Electromagnetic valve according to Claim 1, characterized in that the separating diaphragm (12) is connected in one piece to the valve disc (10).

3. Electromagnetic valve according to Claim 2, characterized in that the separating diaphragm (12) and valve disc (10) consist of a silicone material.

4. Electromagnetic valve according to one of Claims 1 to 3, characterized in that the film (13) is constructed as a closed length of tubing.

5. Electromagnetic valve according to one of Claims 1 to 4, characterized in that the length by which the film (13) overlaps the surface of the valve seat (3) is essentially equal to the film thickness.

6. Electromagnetic valve according to one of Claims 1 to 5, characterized in that the interior (11) of the guide tube (5) is connected to the outside beyond the valve in the region directly above the separating diaphragm (12) by at least one ventilation aperture (14a-14d).

7. Electromagnetic valve according to Claim 6, characterized in that a plurality of ventilation apertures (14a-14d) are arranged on the circumference of the valve housing (1), being distributed in a plane perpendicular to the axis (M) of the valve stem.

8. Electromagnetic valve according to one of Claims 1 to 7, characterized in that the valve disc (10), which is essentially constructed as a frustum-shaped body, is fastened to the valve stem (9) via a screw connection in such a way that there is arranged at the end of the valve stem (9) a threaded pin (15) that has a non-cutting thread which is screwed into a bore (16) in the valve disc (10).

9. Electromagnetic valve according to one of Claims 1 to 8, characterized in that there is arranged coaxially with the axis (M) of the valve stem in the valve disc (10), which is essentially constructed as a frustum-shaped body, a tubular support part (17) that is led out from the valve disc (10) in the direction towards the magnet armature (6) and is led in up to the interior (11) of the guide tube (5) and has drainage channels (17a, 17b) extending in the longitudinal direction over its entire length, at least on its outer lateral surface.

10. Electromagnetic valve according to Claim 9, characterized in that the support part (17) embraces the valve stem (9) and is supported on the magnet armature (6), there being provided, at least in the region of the drainage channels (17a, 17b) in the end of the support part (17) bearing on the magnet armature, apertures (17c) that connect the interior of the support part to the interior of the guide tube.

11. Electromagnetic valve according to one of Claims 1 to 10, characterized in that a film (18) of a fluorine-containing polymer that contains graphite or carbon as filling material is inserted into the section of the guide tube (5) adjacent to the head piece (8), to a predetermined length, in a manner embracing the lateral surface of the magnet armature (6), and is fixed axially and radially, at least at the end facing the head piece (8).

12. Electromagnetic valve according to Claim 11, characterized in that on the side facing the head piece (8) the magnet armature (6) has a longitudinal bore (19) of predetermined depth, in which a helical spring (20) is arranged, and the head piece (8) has an extension (21) which engages in this longitudinal bore (19) and to which one end of the helical spring (20) is fastened, and a film (22) of a fluorine-containing polymer that contains graphite or carbon as filling material is inserted into the longitudinal bore (19) in a manner embracing the helical spring (20).

## Revendications

1. Soupape électromagnétique, en particulier obturateur de distribution de fluides pour l'eau chaude, comportant un boîtier de soupape dans lequel est disposé une chambre de soupape qui est directement reliée par un siège de soupape à un canal d'arrivée et à un canal de sortie, et comportant un système magnétique disposé sur le corps de soupape et muni d'une bobine magnétique dans laquelle est disposée un induit guidé à l'intérieur d'un tube de guidage et qui fait face à un about relié à une culasse d'aimant et qui, sur son extrémité orientée vers le siège de soupape, est relié à travers une tige de soupape à un plateau de soupape, ladite chambre de soupape étant fermée par rapport à l'espace intérieur du tube de guidage par un membrane de séparation dont le bord extérieur est relié de manière étanche au corps de soupape et dont le bord intérieur est relié de manière étanche au plateau de soupape, caractérisée par le fait que le siège de soupape (3) contient, disposé le long de son pourtour intérieur et coaxialement à l'axe (M) de la tige de soupape, un film (13) en polytétrafluoréthylène qui, sur le côté du plateau de soupape (10), dépasse d'une longueur prédéterminée la surface du siège de soupape (3), la surface de l'arête (13a) du film (13) orientée vers le plateau de soupape étant située dans un plan (S) de fermeture qui est disposé perpendiculairement à l'axe (M) de la tige de soupape, et le plateau de soupape (10) étant réalisé en un matériau élastique dont la dureté est inférieure à celle du film (13) et sa surface orientée vers le siège de soupape (3) formant avec le plan de fermeture (S) un angle aigu $\alpha$ au moins dans les zones d'appui (10a) en direction radiale.

2. Soupape électromagnétique selon la revendication 1, caractérisée par le fait que la membrane de séparation (12) forme une seule pièce avec le plateau de soupape (10).

3. Soupape électromagnétique selon la revendication 3, caractérisée par le fait que la membrane de séparation (12), et le plateau de soupape (10) sont réalisés en un matériau à base de silicone.

4. Soupape électromagnétique selon l'une des revendications 1 à 3, caractérisée par le fait que le film (13) est réalisé sous la forme d'une pièce tubulaire fermée.

5. Soupape électromagnétique selon l'une des revendications 1 à 4, caractérisée par le fait que la longueur dont le film (13) dépasse la surface du siège de soupape (3) est sensiblement égale à l'épaisseur dudit film.

6. Soupape électromagnétique selon l'une des revendications 1 à 5, caractérisée par le fait que l'espace intérieur (11) du tube de guidage (5) est relié dans la zone directement au-dessus de la membrane de séparation (12) par au moins un orifice de ventilation (14a - 14d) avec l'espace extérieur à la soupape.

7. Soupape électromagnétique selon la revendication 6, caractérisée par le fait que, répartis sur le pourtour du corps de soupape (1) sont disposés plusieurs orifices de ventilation (14a - 14d) dans un plan perpendiculaire à l'axe (M) de la tige de soupape.

8. Soupape électromagnétique selon l'une des revendications 1 à 7, caractérisée par le fait que le plateau de soupape (10) réalisé sensiblement sous la forme d'un corps tronconique est fixé sur la tige (9) par un vissage de manière telle qu'à l'extrémité de la tige (9) est disposé un pivot fileté (15) qui présente un filetage émoussé qui est vissé dans un alésage (16) pratiqué dans le plateau de soupape (10).

9. Soupape électromagnétique selon l'une des revendications 1 à 8, caractérisée par le fait que dans le plateau (10) réalisé sensiblement sous la forme d'un corps tronconique, coaxialement à l'axe (M) de la tige de soupape, est disposé un élément de renfort tubulaire (17) qui, en direction de l'induit (6), sort du plateau de soupape (10) et pénètre dans l'espace intérieur (11) du tube de guidage (5) et présente au moins sur sa surface latérale extérieure des gorges de drainage (17a, 17b) s'étendant en direction longitudinale sur toute sa longueur.

10. Soupape électromagnétique selon la revendication 9, caractérisée par le fait que l'élément de renfort (17) entoure la tige de soupape (9) et s'appuie sur l'induit (6), des orifices (17c) reliant l'espace intérieur de l'élément de renfort (17) à l'espace intérieur du tube de guidage étant prévus au moins dans la zone des gorges de drainage (17a-17b) dans l'extrémité de l'élément de renfort (17) s'appliquant sur l'induit.

11. Soupape électromagnétique selon l'une des revendications 1 à 10, caractérisée par le fait qu'un film (18) en un polymère fluoré contenant une charge en graphite ou en carbone est inséré dans la section du tube de guidage (5) adjacente à l'about (8), de manière à entourer sur une longueur prédéterminée l'induit (6) sur sa surface périphérique et est fixé radialement et axialement au moins à l'extrémité orientée vers l'about (8).

12. Soupape électromagnétique selon la revendication 11, caractérisée par le fait que l'induit (6) présente sur le côté orienté vers l'about (8) un alésage longitudinal (19) sur une profondeur prédéterminée, alésage dans lequel est disposé un ressort hélicoïdal (20) et l'about (8) ayant une butée (21) pénétrant dans ledit alésage longitudinal (19) et sur laquelle est fixée une extrémité du ressort hélicoïdal (20), un film (22) réalisé en un polymère fluoré contenant une charge de graphite ou de carbone étant inséré dans ledit alésage longitudinal (19) de manière à entourer le ressort hélicoïdal (20).

FIG. 1

FIG. 2

17c

17b

17

17a

**FIG. 3**

**FIG. 4**

14c

23

14d

14b

14a